# EUROPÄISCHE PATENTSCHRIFT

(11) **EP 3 183 071 B1**
(45) Veröffentlichungstag und Bekanntmachung des Hinweises auf die Patenterteilung: **11.09.2019**
(21) Anmeldenummer: 15744547.9
(22) Anmeldetag: 28.07.2015
(51) Int. Cl.: B07C 3/08

(54) **SORTIERVORRICHTUNG FÜR GEGENSTÄNDE UND VERFAHREN ZUM SORTIEREN VON GEGENSTÄNDEN**
DEVICE AND METHOD FOR SORTING OBJECTS
DISPOSITIF ET PROCÉDÉ DE TRI D'OBJETS

(30) Priorität: 22.08.2014 DE 102014216697
(43) Veröffentlichungstag der Anmeldung: 28.06.2017
(73) Patentinhaber: Siemens Aktiengesellschaft, 80333 München (DE)
(72) Erfinder: HASELBERGER, Nikolaus, 78315 Radolfzell-Markelfingen (DE); BERDELLE-HILGE, Peter, 78464 Konstanz (DE)
(74) Vertreter: Maier, Daniel Oliver
(86) Internationale Anmeldenummer: PCT/EP2015/067277
(87) Internationale Veröffentlichungsnummer: WO 2016/026655

(56) Entgegenhaltungen:
- EP-A2- 0 613 730
- WO-A1-2006/056454
- US-A- 4 615 446

## Beschreibung

Die Erfindung betrifft eine Sortiervorrichtung für Gegenstände mit wenigstens zwei Hauptförderstrecken, die jeweils hintereinander angeordnete Gegenstände in einer Förderrichtung transportieren, mit wenigstens zwei Zuführvorrichtungen, die die Gegenstände jeweils einer der Hauptförderstrecken zuführen, mit wenigsten zwei jeweils in der Förderrichtung hinter den Zuführvorrichtungen angeordneten Erkennungseinrichtungen, die für jeden Gegenstand ein Sortierziel ermitteln, mit mehreren am Ende jeder Hauptförderstrecke angeordneten Sortierausgängen, die jeweils Sortierzielen zugeordnet sind und in welche die Gegenstände in Abhängigkeit von ihrem Sortierziel transportiert werden, mit wenigstens zwei von den Hauptförderstrecken an Abzweigpunkten jeweils abzweigenden Verbindungsförderstrecken, die jeweils zwei Hauptförderstrecken verbinden und durch die Gegenstände aus einer Hauptförderstrecke einer anderen Hauptförderstrecke zuführbar sind, und mit wenigstens einer Speichervorrichtung, in der Gegenstände zwischenspeicherbar sind.

Die Erfindung betrifft weiterhin ein Verfahren zum Sortieren von Gegenständen, bei dem die Gegenstände wenigstens zwei Hauptförderstrecken zugeführt werden, die Sortierziele der Gegenstände jeweils ermittelt werden, die Gegenstände in Abhängigkeit von ihrem Sortierziel in den Hauptförderstrecken in einer Förderrichtung zu Sortierausgängen transportiert werden, wenigstens einige Gegenstände aus der einen Hauptförderstrecke an einem Abzweigpunkt in eine Verbindungsförderstrecke abgezweigt und einer anderen Hauptförderstrecke zugeführt werden und wenigstens einige Gegenstände zwischengespeichert werden.

Eine Sortiervorrichtung und ein Verfahren der oben genannten Art sind beispielsweise in der US 4,615,446 beschrieben und werden insbesondere zum Sortieren von flachen Gegenständen, wie beispielsweise Briefen und Großbriefen, eingesetzt. Durch den Einsatz von zwei Zuführvorrichtungen, die zwei Hauptförderstrecken versorgen, denen unterschiedliche Sortierausgänge zugeordnet sind, kann der Durchsatz der beschriebenen Sortiervorrichtung erhöht werden. Dies ist insbesondere bei der sogenannten Gangfolgesortierung von Vorteil.

Allerdings kann es bei der in der US 4,615,446 beschriebenen Vorrichtung zu Problemen kommen, wenn zu viele Gegenstände von einer Hauptförderstrecke einer anderen Hauptförderstrecke zugeführt werden müssen. Wenn nämlich viele Gegenstände über die Verbindungsförderstrecke einer Hauptförderstrecke zugeführt werden sollen, in deren Gegenstandsstrom aber keine Lücken vorhanden sind, müssen diese Gegenstände zwischengespeichert werden, bis Lücken für ein Einschleusen vorhanden sind. Da die Gegenstände ohne Vorsortierung von den Zuführvorrichtungen eingespeist werden, kann es zu unvorhersehbaren Ungleichverteilungen zwischen den Hauptförderstrecken kommen. Die Ungleichverteilungen sorgen für die genannte Problematik.

Es ist daher die Aufgabe der vorliegenden Erfindung, eine Sortiervorrichtung und ein Verfahren der eingangs genannten Art bereitzustellen, die mit Ungleichverteilungen besser zurechtkommen.

Die eingangs genannte Sortiervorrichtung löst die Aufgabe dadurch, dass die Speichervorrichtung zwischengespeicherte Gegenstände einer der Hauptförderstrecken vor wenigstens einem der Abzweigpunkte zuführt.

Das eingangs genannte Verfahren löst die Aufgabe dadurch, dass die zwischengespeicherten Gegenstände einer der Hauptförderstrecken vor wenigstens einem der Abzweigpunkte zugeführt werden.

Die erfindungsgemäße Lösung hat den Vorteil, dass die zwischengespeicherten Gegenstände vor den Verbindungsförderstrecken gespeichert werden, wodurch eine größere Auslegung der Speichervorrichtung möglich ist. Im Bereich der Hauptförderstrecken steht mehr Platz zur Verfügung als im Bereich der Verbindungsförderstrecken.

Die erfindungsgemäße Lösung hat den weiteren Vorteil, dass die Gegenstände vor dem Erreichen des Abzweigpunkts zur Verbindungsförderstrecke zwischenspeicherbar sind. So kann die Laufzeit vergrößert werden und dadurch die Bearbeitungszeit der Erkennungseinrichtung zur Ermittlung des Sortierziels vergrößert werden. So wird es unwahrscheinlicher, dass Sendungen aufgrund eines nicht ermittelten Sortierziels einer falschen Hauptförderstrecke zugeordnet werden. Solche falsch zugeordneten Gegenstände könnten nicht richtig sortiert werden, sondern müssten ausgeschleust und neu zugeführt werden. Dies soll vermieden werden.

Die erfindungsgemäße Lösung kann durch vorteilhafte Ausgestaltungen weiterentwickelt werden, die im Folgenden beschrieben sind.

So kann die Speichervorrichtung wenigstens eine in einer der Hauptförderstrecken angeordnete Weiche, eine an der Weiche von der Hauptförderstrecke abzweigende Rückführstrecke und einen am Ende der Rückführstrecke angeordneten Rückführpunkt zur Hauptförderstrecke aufweisen, wobei die Weiche in der Förderrichtung der Hauptförderstrecke hinter dem Rückführpunkt angeordnet ist. Dies hat den Vorteil, dass Gegenstände, die zwischengespeichert werden sollen, entgegen der Förderrichtung quasi zurücktransportiert und wieder eingeschleust werden. Dadurch kann eine relativ große Speicherzeit für einen solchen Gegenstand ermöglicht werden. Die Speichervorrichtung ist dadurch als eine Art Ringspeicher ausgebildet, in dem gespeicherte Gegenstände mindestens einmal zirkulieren.

Um das Speichern der Gegenstände in der Speichervorrichtung flexibel anpassen zu können, kann wenigstens ein Transportparameter der Gegenstände in der Hauptförderstrecke im Vergleich zur Rückführstrecke unterschiedlich sein. Solche Transportparameter können hier insbesondere die Transportgeschwindigkeit der Gegenstände und/oder ein Abstand zwischen zwei aufeinanderfolgender Gegenstände sein. Da die Rückführstrecke nicht Teil der Hauptförderstrecke ist, kann diese mit einem separaten Antrieb versehen sein, der unabhängig gesteuert werden kann.

Ferner kann die Sortiervorrichtung eine Steuerung aufweisen, welche die Sortiervorrichtung steuert und zum Rückführen eines in der Speichervorrichtung befindlichen Gegenstandes eine ausreichende Lücke im Gegenstandsstrom der Hauptförderstrecke erzeugt. Dies hat den Vorteil, dass die Gegenstände in der Speichervorrichtung gut wieder in die Hauptförderstrecke eingeschleust werden können. Die Steuerung kann beispielsweise die entsprechende Zuführvorrichtung kurzzeitig stoppen, um die entsprechende Lücke in der Hauptförderstrecke zu erzeugen.

Um möglichst wenig kostenintensive Sortierausgänge zu benötigen, kann die Sortiervorrichtung zum Sortieren der Gegenstände in wenigstens drei Sortierdurchläufen ausgebildet sein. Die Sortierung in drei Sortierläufen - dem sogenannten Drei-Pass mit Anwendung des sogenannten Radix-Verfahrens - hat den Vorteil, dass weniger Sortierausgänge benötigt werden.

Im Folgenden wird die Erfindung mit Bezug auf die beigefügten Zeichnungen und der darin gezeigten beispielhaften Ausführungsform erläutert.

Es zeigen:
- Figur 1: eine schematische Darstellung einer ersten Ausführungsform der erfindungsgemäßen Sortiervorrichtung;
- Figur 2: eine schematische Darstellung einer weiteren Ausführungsform der erfindungsgemäßen Sortiervorrichtung.

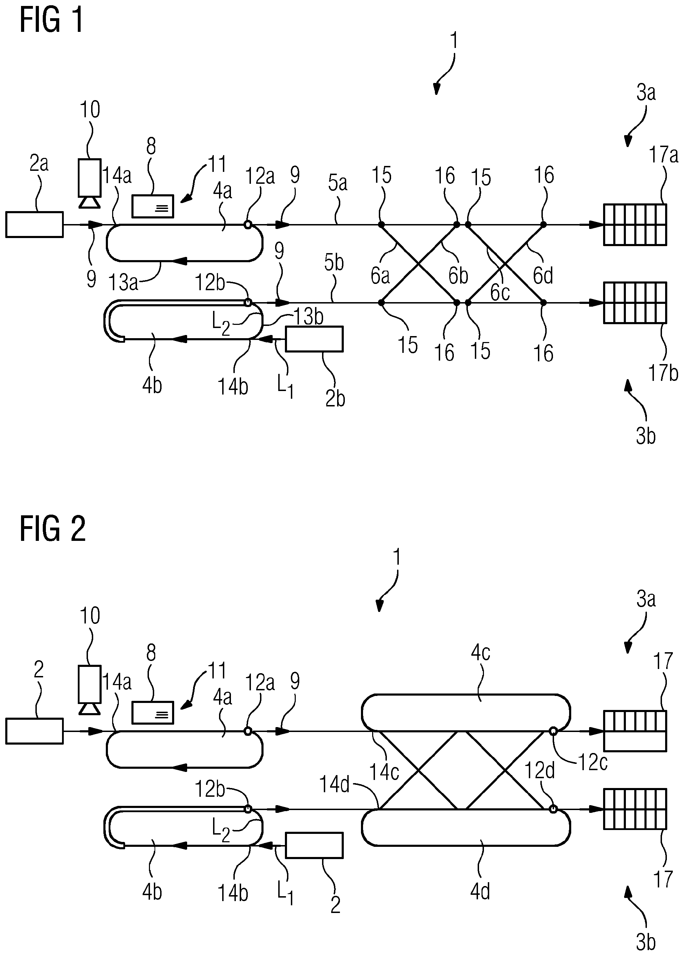

Zunächst wird die erfindungsgemäße Sortiervorrichtung mit Bezug auf die beispielhafte Ausführungsform in Figur 1 beschrieben.

Die Sortiervorrichtung 1 in Figur 1 umfasst zwei Zuführvorrichtungen 2a, 2b, eine erste und eine zweite Gruppe von Sortierausgängen 3a, 3b und zwei Speichervorrichtungen 4a, 4b. Ferner weist die Sortiervorrichtung 1 zwei Hauptförderstrecken 5a, 5b und mehrere zwischen den Hauptförderstrecken 5a, 5b angeordnete Verbindungsförderstrecken 6a, 6b, 6c, 6d auf, die die Hauptförderstrecken 5a, 5b miteinander verbinden. Weiterhin umfasst die Sortiervorrichtung 1 eine Steuerung 7, die die Sortiervorrichtung 1 und deren Komponenten steuert. Die Komponenten sind mit Zahlen und Buchstaben bezeichnet. Die Buchstaben dienender Unterscheidung der sonst gleichen Komponenten der beiden Hauptförderstrecken. Bei Verwendung der Bezugszeichen ohne Buchstaben sind die Komponenten beider Hauptförderstrecken gemeint.

Die Zuführeinrichtungen 2a, 2b sind jeweils zum Zuführen von Gegenständen 8 in die Hauptförderstrecken 5a, 5b ausgebildet. Die von der Sortiervorrichtung 1 in Figur 1 zu sortierenden Gegenstände 8 sind flache Sendungen, wie beispielsweise Briefe oder Großbriefe. Die Zuführeinrichtungen 2a, 2b sind in an sich bekannter Weise ausgeführt und vereinzeln beispielsweise einen eingelegten Stapel von Gegenständen 8 zu einem Gegenstandsstrom, in dem die flachen Gegenstände 8 hochkantstehend hintereinander und mit einem Abstand zueinander versehen der jeweiligen Hauptförderstrecke 5a, 5b zugeführt werden.

In der Hauptförderstrecke 5 werden die Gegenstände 8 in einer Förderrichtung 9 in Richtung der jeweiligen Gruppe von Sortierausgängen 3 transportiert. In der Hauptförderstrecke 5 werden die hochkant stehenden flachen Gegenstände 8 üblicherweise beidseitig gefasst, beispielsweise von Endlosbändern, transportiert.

Die zwei Gruppen von Sortierausgängen 3a, 3b am Ende der beiden Hauptförderstrecken 5a, 5b weisen jeweils mehrere Sortierausgänge 17a, 17b auf, die Sortierzielen der Gegenstände 8 zugeordnet sind. Die Sortierausgänge 17a, 17b sind in bekannter Weise beispielsweise als Stapelfächer ausgebildet, in denen die dem jeweiligen Sortierausgang 17 zugewiesenen Gegenstände 8 gestapelt ausgegeben werden.

Die Sortiervorrichtung 1 weist ferner zwei Erkennungseinrichtungen 10 auf, die zum Ermitteln eines Sortierziels für jeden Gegenstand ausgebildet sind. Das Sortierziel 11 ist beispielsweise als Empfängeradresse auf dem Gegenstand 8 angeordnet. Zur Ermittlung des Sortierziels 11 erzeugt eine zur Erkennungseinrichtung 10 gehörige Kamera (nicht dargestellt) ein Abbild des Gegenstands 8 und ermittelt beispielsweise durch OCR-Technik (Optical Character Reading) das Sortierziel 11 aus der Empfängeradresse. Das ermittelte Sortierziel 11 wird an die Steuerung 7 weitergegeben, die den Gegenstand 8 zu dem dem Sortierziel zugewiesenen Sortierausgang 17 transportiert. Die Erkennungseinrichtung 10 ist in der Förderrichtung 9 unmittelbar hinter der Zuführeinrichtung 2 angeordnet.

Die beiden Speichervorrichtungen 4a, 4b weisen bei der Ausführungsform in Figur 1 jeweils eine in der Hauptförderstrecke 5 angeordnete Weiche 12, eine Rückführstrecke 13a, 13b und einen Rückführpunkt 14a, 14b auf. Die Rückführstrecke 13 verläuft von der Weiche 12 bis zu dem ebenfalls in der Hauptförderstrecke 5 angeordneten Rückführpunkt 14.

Die in der Förderrichtung 9 hinter den Speichervorrichtungen 4 angeordneten Verbindungsförderstrecken 6 verlaufen jeweils von einem in der Hauptförderstrecke 5 angeordneten Abzweigpunkt 15 zu einem Verbindungspunkt 16 in der jeweils anderen Hauptförderstrecke 5. Die Verbindungsförderstrecken 6 weisen am Abzweigpunkt 15 jeweils eine Abzweigweiche (nicht dargestellt) auf, durch die Gegenstände 8 von der Steuerung 7 entweder in der Hauptförderstrecke 5 belassen oder in die Verbindungsförderstrecke 6 abgezweigt werden können. Ferner können die Verbindungsförderstrecken 6 jeweils nicht dargestellte Speichermittel aufweisen, durch die Gegenstände 8 in der Verbindungsförderstrecke 6 zumindest kurzzeitig gespeichert werden können, wie beispielsweise in der US 4,615,446 beschrieben.

Im Folgenden wird die Funktion der erfindungsgemäßen Sortiervorrichtung 1 in der beispielhaften Ausführungsform der Figur 1 beschrieben.

Von den beiden Zuführeinrichtungen 2 werden unsortierte Gegenstände 8 den beiden Hauptförderstrecken 5a, 5b zugeführt. Dadurch entsteht ein Gegenstandsstrom aus hintereinanderstehend angeordneten Gegenständen 8, die mit einem Abstand zueinander in Richtung der Gruppen von Sortierausgängen 3 gefördert werden. Wenn die Gegenstände 8 die Erkennungseinrichtungen 10 passieren, werden anschließend die Sortierziele 11 der Gegenstände 8 ermittelt und jedem Gegenstand 8 in Abhängigkeit von dem ermittelten Sortierziel 11 ein Sortierausgang 17 in einer der beiden Gruppen von Sortierausgängen 3a, 3b zugewiesen.

Da den Gruppen von Sortierausgängen 3a, 3b unterschiedliche Sortierziele 11 zugeordnet sind, kann es passieren, dass sich ein Gegenstand 8 auf einer Hauptförderstrecke 5a befindet, die ihn nicht zur richtigen Gruppe von Sortierausgängen 3b führt. In diesem Fall muss der Gegenstand 8 der jeweils anderen, richtigen Hauptförderstrecke 5b über eine der Verbindungsförderstrecken 6 zugeführt werden. Allerdings ist dieses Zuführen erst möglich, wenn ein Freiraum im Gegenstandsstrom der anderen Hauptförderstrecke 5b vorhanden ist. Wenn dieser Freiraum nicht vorhanden ist, weil beispielsweise alle Gegenstände 8 der Hauptförderstrecke 5b richtig zugewiesen sind, kann der Gegenstand 8 aus der Hauptförderstrecke 5a zunächst nicht zugeführt werden. In diesem Fall spricht man auch von einer Schieflast des Systems. In diesem Fall wird der Gegenstand 8, der von der Hauptförderstrecke 5a in die Hauptförderstrecke 5b überführt werden soll, in der Speichervorrichtung 4a zwischengespeichert bis er über eine Verbindungsförderstrecke 6 der Hauptförderstrecke 5b zugeführt werden kann.

Für die Zwischenspeicherung des Gegenstands 8 wird die Weiche 12a von der Steuerung 7 so angesteuert, dass der Gegenstand 8 in die Rückführstrecke 13a ausgeschleust wird. Am Ende der Rückführstrecke 13a wird der Gegenstand 8 an dem Rückführpunkt 14a wieder in die Hauptförderstrecke 5a eingeleitet. Da der Rückführpunkt 14 jeweils in der Förderrichtung 9 vor der Weiche 12 in der Hauptförderstrecke 5 angeordnet ist, wird der Gegenstand 8 für eine bestimmte Speicherzeit in der Speichervorrichtung 4 zwischengespeichert. Die Speicherzeit hängt im Wesentlichen von der Transportgeschwindigkeit und den Sendungsabständen in der Rückführstrecke 13 ab, die von der Transportgeschwindigkeit in der Hauptförderstrecke 5 ggf. abweichen kann. Der zwischengespeicherte und nun rückgeführte Gegenstand 8 kann von der Hauptförderstrecke 5a in die Hauptförderstrecke 5b über eine der Verbindungsförderstrecken 6a, 6c überführt werden, wenn nach der Zwischenspeicherung ein entsprechender Freiraum in der Hauptförderstrecke 6b vorhanden ist. Dieser Freiraum kann in der Zwischenzeit durch die Steuerung 7 hergestellt worden sein, beispielsweise durch ein zeitweiliges Stoppen der Zuführeinrichtung 2b oder einer Zwischenspeicherung eines Gegenstands 8 in der Speichervorrichtung 4b.

Die Speichervorrichtungen 4 können zusätzlich oder alternativ auch für die Zwischenspeicherung von Gegenständen 8 genutzt werden, für die bis zum Erreichen der Weiche 12 noch kein Sortierziel 11 von der Erkennungseinrichtung 10 ermittelt werden konnte. Dadurch ist für diesen Gegenstand 8 unklar, ob er der richtigen Hauptförderstrecke 5 zugeordnet ist. Durch Ausschleusen dieses Gegenstands 8 in die Speichervorrichtung 4 kann das Sortierziel 11 während der Speicherzeit ermittelt werden und anschließend der Gegenstand 8 zur richtigen Gruppe der Sortierausgänge 3a, 3b transportiert werden. Da der Rückführpunkt 14 der Speichervorrichtung 4 jeweils vor den Abzweigpunkten 15 in der Förderrichtung 9 angeordnet ist, kann nach der Speicherung der Gegenstände 8 in der Speichervorrichtung 4 über einen nötigen Transport in einer der Verbindungsförderstrecken 6 entschieden werden.

Eine Streckenlänge L₁ von einer der Zuführeinrichtungen 2a, 2b bis zum Rückführpunkt 14a, 14b ist kürzer ausgebildet als eine Streckenlänge L₂ der Rückführstrecke 13a, 13b. Dies hat den Vorteil, dass die Zuführeinrichtung 2a, 2b gestoppt werden kann, um eine Lücke zu bilden, wenn ein Gegenstand in die Rückführstrecke 13a, 13b eingeleitet wurde. Alternativ müssten Speichermittel auf der Strecke L₂ eingesetzt werden.

Im Folgenden wird die Erfindung mit Bezug auf die weitere beispielhafte Ausführungsform der Sortiervorrichtung 1 in Figur 2 beschrieben. Der Einfachheit halber wird lediglich auf die Unterschiede zu der Sortiervorrichtung 1 in Figur 1 eingegangen.

Im Gegensatz zur Ausführungsform in Figur 1 weist die Sortiervorrichtung 1 in Figur 2 zwei weitere Speichervorrichtungen 4c, 4d auf, die hinter den Speichervorrichtungen 4a, 4b angeordnet sind. Dabei sind die Weichen 12c, 12d jeweils hinter den Abzweigpunkten 15 und den Verbindungspunkten 16 der Verbindungsförderstrecken 6 angeordnet. Die Rückführpunkte 14c, 14d dagegen sind jeweils vor den Abzweigpunkten 15 und den Verbindungspunkten 16 angeordnet. Durch die zusätzlichen Speichervorrichtungen 4c, 4d können weitere Gegenstände 8 gespeichert werden.

Alternativ zu der in Figur 2 dargestellten Ausführungsform können in einer nicht dargestellten Ausführungsform der Erfindung die Speichervorrichtungen 4a, 4b weggelassen werden und die Sortiervorrichtung 1 nur mit den Speichervorrichtungen 4c, 4d betrieben werden.

## Patentansprüche

1. Sortiervorrichtung (1) für Gegenstände (8)
mit wenigstens zwei Hauptförderstrecken (5a, 5b), die jeweils hintereinander angeordnete Gegenstände (8) in einer Förderrichtung (9) transportieren,
mit wenigstens zwei Zuführvorrichtungen (2a, 2b), welche die Gegenstände (8) jeweils einer der Hauptförderstrecken (5a, 5b) zuführen,
mit wenigstens zwei jeweils in der Förderrichtung (9) hinter den Zuführvorrichtungen (2a, 2b) angeordneten Erkennungseinrichtungen (10), die für jeden Gegenstand (8) ein Sortierziel (11) ermitteln,
mit mehreren am Ende jeder Hauptförderstrecke (5a, 5b) angeordneten Sortierausgängen (17), die jeweils Sortierzielen (11) zugeordnet sind und in welche die Gegenstände (8) in Abhängigkeit von ihrem Sortierziel (11) transportiert werden,
mit wenigstens zwei von den Hauptförderstrecken (5a, 5b) an Abzweigpunkten (15) jeweils abzweigenden Verbindungsförderstrecken (6a, 6b, 6c, 6d), die jeweils zwei Hauptförderstrecken (5a, 5b) verbinden und durch die Gegenstände (8) aus einer Hauptförderstrecke (5a, 5b) einer anderen Hauptförderstrecke (5a, 5b) zuführbar sind,
und mit wenigstens einer Speichervorrichtung (4a, 4b, 4c, 4d), in der Gegenstände (8) zwischenspeicherbar sind,
**dadurch gekennzeichnet, dass** die Speichervorrichtung (4a, 4b, 4c, 4d) zwischengespeicherte Gegenstände (8) einer der Hauptförderstrecken (5a, 5b) in Förderrichtung (9) vor wenigstens einem der Abzweigpunkte (15) zuführt.

2. Sortiervorrichtung (1) nach Anspruch 1,
**dadurch gekennzeichnet, dass**
die Speichervorrichtung (4a, 4b, 4c, 4d) wenigstens eine in einer der Hauptförderstrecken (5a, 5b) angeordnete Weiche (12), eine an der Weiche (12) von der Hauptförderstrecke (5a, 5b) abzweigende Rückführstrecke (13) und einen am Ende der Rückführstrecke (13) angeordneten Rückführpunkt (14) zur Hauptförderstrecke (5a, 5b) aufweist, wobei die Weiche (12) in der Förderrichtung (9) der Hauptförderstrecke (5a, 5b) hinter dem Rückführpunkt (14) angeordnet ist.

3. Sortiervorrichtung (1) nach Anspruch 2,
**dadurch gekennzeichnet, dass**
wenigstens ein Transportparameter der Gegenstände (8) in der Hauptförderstrecke (5a, 5b) im Vergleich zur Rückführstrecke (13) unterschiedlich ist.

4. Sortiervorrichtung (1) nach Anspruch 1, 2 oder 3,
**dadurch gekennzeichnet, dass**
die Sortiervorrichtung (1) eine Steuerung aufweist, welche die Sortiervorrichtung (1) steuert und zum Rückführen eines in der Speichervorrichtung (4) befindlichen Gegenstandes (8) eine ausreichende Lücke im Gegenstandsstrom der Hauptförderstrecke (5a, 5b) erzeugt.

5. Sortiervorrichtung (1) nach einem der oben genannten Ansprüche,
**dadurch gekennzeichnet, dass**
die Sortiervorrichtung (1) zum Sortieren der Gegenstände (8) in wenigstens drei Sortierdurchläufen ausgebildet ist.

6. Verfahren zum Sortieren von Gegenständen (8),
bei dem die Gegenstände (8) wenigsten zwei Hauptförderstrecken (5a, 5b) zugeführt werden, die Sortierziele (11) der Gegenstände (8) jeweils ermittelt werden, die Gegenstände (8) in Abhängigkeit von ihrem Sortierziel (11) in den Hauptförderstrecken (5a, 5b) in einer Förderrichtung (9) zu Sortierausgängen (17) transportiert werden, wenigstens einige Gegenstände (8) aus der einen Hauptförderstrecke (5a, 5b) an einem Abzweigpunkt (15) in eine Verbindungsförderstrecke (6a, 6b, 6c, 6d) abgezweigt und einer anderen Hauptförderstrecke (5a, 5b) zugeführt werden und wenigstens einige Gegenstände (8) zwischengespeichert werden,
**dadurch gekennzeichnet, dass**
die zwischenspeicherten Gegenstände (8) einer der Hauptförderstrecken (5a, 5b) vor wenigstens einem der Abzweigpunkt (15) zuführt werden.

7. Verfahren nach Anspruch 6,
**dadurch gekennzeichnet, dass**
die Gegenstände (8) in wenigstens drei Sortierläufen sortiert werden.

## Claims

1. Sorting device (1) for articles (8)
comprising at least two main conveyor lines (5a, 5b), each conveying consecutively arranged articles (8) in a direction of conveyance (9),
at least two feeder devices (2a, 2b) which respectively feed the articles (8) to one of the main conveyor lines (5a, 5b),
at least two recognition devices (10) each arranged in the direction of conveyance (9) downstream of the feeder devices (2a, 2b), which detect a sorting destination (11) for each article (8),
a plurality of sorting outlets (7) arranged at the end of each main conveyor line (5a, 5b), which are each assigned to sorting destinations (11) and into which the articles (8) are transported according to their sorting destination (11),
at least two connecting conveyor lines (6a, 6b, 6c, 6d), each branching off from the main conveyor lines (5a, 5b) at branch points (15), each of which connects two main conveyor lines (5a, 5b) and by way of which articles (8) can be fed from one main conveyor line (5a, 5b) to another main conveyor line (5a, 5b),
and at least one storage device (4a, 4b, 4c, 4d) in which articles (8) can be stored temporarily,
**characterised in that**
the storage device (4a, 4b, 4c, 4d) feeds temporarily stored articles (8) to one of the main conveyor lines (5a, 5b) in the direction of conveyance (9) upstream of at least one of the branch points (15).

2. Sorting device (1) according to claim 1,
**characterised in that**
the storage device (4a, 4b, 4c, 4d) comprises at least one diverter gate (12) arranged in one of the main conveyor lines (5a, 5b), a return line (13) branching off from the main conveyor line (5a, 5b) at the diverter gate (12) and a return point (14) to the main conveyor line (5a, 5b) arranged at the end of the return line (13), wherein the diverter gate (12) is arranged downstream of the return point (14) in the direction of conveyance (9) of the main conveyor line (5a, 5b).

3. Sorting device (1) according to claim 2,
**characterised in that**
at least one transport parameter for the articles (8) on the main conveyor line (5a, 5b) is different in comparison with the return line (13).

4. Sorting device (1) according to claim 1, 2 or 3,
**characterised in that**
the sorting device (1) comprises a controller which controls the sorting device (1) and creates an adequate gap in the stream of articles on the main conveyor line (5a, 5b) in order to return an article (8) situated in the storage device (4).

5. Sorting device (1) according to one of the preceding claims,
**characterised in that**
the sorting device (1) is designed in order to sort the articles (8) in at least three sorting passes.

6. Method for sorting articles (8),
wherein the articles (8) are fed to at least two main conveyor lines (5a, 5b), the sorting destinations (11) are detected for each article (8), the articles (8) are transported on the main conveyor lines (5a, 5b) in a direction of conveyance (9) to sorting outlets (17) according to their sorting destination (11), at least some articles (8) are branched off from the one main conveyor line (5a, 5b) at a branch point (15) onto a connecting conveyor line (6a, 6b, 6c, 6d) and fed to another main conveyor line (5a, 5b) and at least some articles (8) are stored temporarily,
**characterised in that**
the temporarily stored articles (8) are fed to one of the main conveyor lines (5a, 5b) upstream of at least one of the branch points (15).

7. Method according to claim 6,
**characterised in that**
the articles (8) are sorted in at least three sorting passes.

## Revendications

1. Dispositif de tri (1) pour des objets (8),
muni d'au moins deux voies de transport principales (5a, 5b) qui transportent dans un sens de transport (9) des objets (8) agencés respectivement les uns derrière les autres,
muni d'au moins deux dispositifs d'alimentation (2a, 2b) qui alimentent les objets (8) vers respectivement une des voies de transport principales (5a, 5b),
muni d'au moins deux appareils d'identification (10) agencés respectivement derrière les dispositifs d'alimentation (2a, 2b) dans le sens de transport (9) et qui déterminent une destination de tri (11) pour chaque objet (8),
muni de plusieurs sorties de tri (17) agencées au niveau d'une extrémité de chaque voie de transport principale (5a, 5b), associées respectivement à des destinations de tri (11) et vers lesquelles les objets (8) sont transportés en fonction de leur destination de tri (11),
muni d'au moins deux voies de transport de liaison (6a, 6b, 6c, 6d) déviant respectivement par rapport aux voies de transport principales (5a, 5b) au niveau de points de déviation (15) et qui relient respectivement deux voies de transport principales (5a, 5b) et grâce auxquelles des objets (8) peuvent être alimentés vers une voie de transport principale (5a, 5b) à partir d'une autre voie de transport principale (5a ,5b),
et muni d'au moins un dispositif de stockage (4a, 4b, 4c, 4d) dans lequel des objets (8) peuvent être stockés de manière temporaire,
**caractérisé en ce que**,
le dispositif de stockage (4a, 4b, 4c, 4d) alimente des objets (8) stockés de manière temporaire vers une des voies de transport principales (5a, 5d) avant au moins un des points de déviation (15) dans le sens de transport (9).

2. Dispositif de tri (1) selon la revendication 1,
**caractérisé en ce que**,
le dispositif de stockage (4a, 4b, 4c, 4d) présente au moins un aiguillage (12) agencé sur une des voies de transport principales (5a, 5b), une voie de remise en circulation (13) déviant de la voie de transport principale (5a, 5b) au niveau de l'aiguillage (12), et un point de remise en circulation (14) vers la voie de transport principale (5a, 5b), agencé au niveau de l'extrémité de la voie de remise en circulation (13), dans lequel l'aiguillage (12) est agencé derrière le point de remise en circulation (14) dans le sens de transport (9) de la voie de transport principale (5a, 5b).

3. Dispositif de tri (1) selon la revendication 2,
**caractérisé en ce que**,
au moins un paramètre de transport des objets (8) au sein de la voie de transport principale (5a, 5b) est différent comparé à celui au sein de la voie de remise en circulation (13).

4. Dispositif de tri (1) selon l'une quelconque des revendications 1, 2 ou 3,
**caractérisé en ce que**,
le dispositif de tri (1) présente une commande qui commande le dispositif de tri et qui crée au sein du flux d'objets de la voie de transport principale (5a, 5b) un intervalle suffisant pour une remise en circulation d'un objet (8) se trouvant dans le dispositif de stockage (4).

5. Dispositif de tri (1) selon l'une quelconque des revendications précédentes,
**caractérisé en ce que**,
le dispositif de tri (1) est réalisé en vue du tri des objets (8) au sein d'au moins trois circuits continus de tri.

6. Procédé de tri d'objets (8),
dans lequel les objets (8) sont alimentés vers au moins deux voies de transport principales (5a, 5b), les destinations de tri (11) des objets (8) sont respectivement déterminées, les objets (8) sont transportés sur les voies de transport principales (5a, 5b) dans un sens de transport (9) vers des sorties de tri (17) en fonction de leur destination de tri (11), au moins quelques objets (8) sont déviés de l'une des voies de transport principales (5a, 5b) vers une voie de transport de liaison (6a, 6b, 6c, 6d) au niveau d'un point de déviation (15) et sont alimentés vers une autre voie de transport principale (5a, 5b), et au moins quelques objets (8) sont stockés de manière temporaire,
**caractérisé en ce que**,
les objets (8) stockés de manière temporaire sont alimentés vers une des voies de transport principales (5a, 5b) avant au moins un des points de déviation (15).

7. Procédé selon la revendication 6,
**caractérisé en ce que**,
les objets (8) sont triés au sein d'au moins deux circuits continus de tri.
